# EUROPÄISCHE PATENTSCHRIFT

(11) **EP 0 894 515 B1**
(45) Veröffentlichungstag und Bekanntmachung des Hinweises auf die Patenterteilung: **17.09.2003**
(21) Anmeldenummer: 98101726.2
(22) Anmeldetag: 02.02.1998
(51) Int. Cl.: A63C 17/04, B62K 9/00

(54) **Sport- und Spielgerät**
Sport- and playing device
Appareil de sport et de jeu

(30) Priorität: 28.07.1997 DE 19732406
(43) Veröffentlichungstag der Anmeldung: 03.02.1999
(73) Patentinhaber: Sport-Thieme GmbH, 38368 Grasleben (DE)
(72) Erfinder: Zenker, Jochen, 38154 Königslutter (DE)
(74) Vertreter: Einsel, Martin, Dipl.-Phys.

(56) Entgegenhaltungen:
- EP-A- 0 274 765
- US-A- 3 318 614
- US-A- 5 129 664

## Beschreibung

Die Erfindung betrifft ein Sport- und Spielgerät mit Rädern und dazwischen angeordneten Trittbrettelementen zum Fortbewegen durch Betätigen mit den Füßen, wobei die Trittbrettelemente so dimensioniert sind, daß auf ihnen ein gesamter Fuß auflagerbar ist, gemäß dem Oberbegriff des Patentanspruchs 1.

Sport- und Spielgeräte der genannten Art sind bekannt (siehe WO 96/09953 oder US-A-5 129 664). Sie werden insbesondere unter dem Begriff "Pedalo" angeboten. Dabei gibt es verschiedene Ausführungsformen. In einer einfachen Ausführungsform sind drei Räder so durch Trittbrettelemente miteinander verbunden, daß jeweils am äußeren Radius der Räder eine Anbringung der Trittbrettelemente in 180°- Versatz erfolgt. Beim Daraufstellen mit den Füßen auf die sehr schmalen Trittbrettelemente steht dadurch zunächst ein Fuß nahezu auf dem Boden, wohingegen der andere nahezu in der Maximalhöhe der Räder über dem Boden steht. Ein Fortbewegen wird dann durch senkrechten Druck nach unten, jeweils wechselweise des linken und des rechten Beines, erzeugt. Aufgrund des sehr wackeligen Standes wird dadurch das Gleichgewicht und die Koordinationsfähigkeit sowie die Rhythmik geübt. Versierte Personen können mit einem solchen Pedalo vorwärts- und rückwärtsfahren sowie über Unebenheiten und schiefen Ebenen sich bewegen. Häufig wird auch ein Transport während der Fahrt mit dem Pedalo oder aber ein Jonglieren währenddessen geübt. Dabei gibt es sogar die Möglichkeit, ein sogenanntes Differential In der Anbringung der Trittbrettelemente an den Rädern vorzusehen, um hier die Möglichkeit zu schaffen, mit den Pedalos um eine Kurve zu fahren.

Anstelle der lediglich drei Räder sind auch Pedalos bekannt mit sechs gleich groß gefertigten Rädern. Die Auflagefläche der Trittbrettelemente ist dabei so groß, daß der gesamte Fuß darauf paßt. Im wesentlichen sind für ein solches Pedalo mit sechs Rädern zwei Pedalos mit jeweils drei Rädern so aneinandergefügt, daß jeweils bei den einzelnen Trittbrettern einer Seite diese miteinander zu den großen Auflageflächen für die Füße verbunden sind. Dadurch wird natürlich eine Erleichterung geschaffen, da die Balance auf dem Pedalo besser gehalten werden kann. Die Betätigung der Doppel-Pedalos erfolgt dann, ebenso wie die der Einzel-Pedalos mit nur drei Rädern, durch senkrechten Druck von oben nach unten.

Eine weitere bekannte Ausführungsform der Pedalos ist so konstruiert, daß die Auftrittfläche zwischen den vorderen drei Rädern und den hinteren drei Rädern so lang gewählt wird, daß darauf mehrere Personen Platz finden. Ein solches Pedalo mit verlängerten Trittbrettelementen ist dann beispielsweise für das Spiel von Kindern geeignet. Hiermit kann das Sozialverhalten, Rhythmik, Koordinationsfähigkeit und Bewegungssicherheit erprobt werden. Bei dieser Ausführungsvariante werden häufig Stützen bzw. Haltestangen entweder vom und/oder hinten oder aber an den Seiten der Trittbrettelemente vorgesehen. Eine solche Anbringung empfiehlt sich bereits aus Sicherheitsgründen bei der Benutzung durch mehrere Personen. Um die Scherwirkung im Bereich des mittleren Rades zu vermindern, an dem auf der einen Seite das jeweils eine Trittbrettelement und auf der anderen Seite das andere Trittbrettelement im Versatz um 180° angebracht sind, kann dieses eine mittlere Rad zu zwei Rädern gemacht werden. An dem einen Rad ist dann das jeweils eine Trittbrettelement angeordnet und an dem anderen das andere. Die beiden Räder sind untereinander mit Abstandshalteelementen fest verbunden. Dadurch wird auch eine breitere Beinstellung bei den auf einem solchen Pedalo mit insbesondere sehr langen Trittbrettelementen stehenden Personen erzwungen.

Der Erfindung liegt die Aufgabe zugrunde, ein neuartiges Sport- und Spielgerät nach dem Oberbegriff des Anspruchs 1 zu schaffen, bei dem die Betätigung zum Fortbewegen durch eine harmonischere Bewegung als einen bloßen Druck senkrecht von oben nach unten erzeugt wird.

Die Aufgabe wird durch ein Sport- und Spielgerät gemäß Anspruch 1 gelöst. Weiterbildungen der Erfindung sind in den Unteransprüchen definiert.

Dadurch wird ein Sport- und Spielgerät geschaffen, das sich ebenfalls vorteilhaft für therapeutische Zwecke einsetzen läßt. Insbesondere können damit Patienten bei bzw. nach Bänderzerrungen und -dehnungen bei der Rehabilitation mit Übungen trainiert werden. Dabei wird sowohl das Gleichgewicht als auch die Bewegungsfähigkeit trainiert. Es muß nämlich sowohl das Gewicht verlagert als auch die Füße bewegt werden zur Fortbewegung auf dem Gerät. Das Sportund Spielgerät eignet sich daher unter anderem für die motorische Erziehung bei Kleinkindern und im Behindertenbereich. Im Unterschied zum Stand der Technik, bei dem lediglich die Oberschenkel trainiert werden, wird aufgrund der Winkeländerung während der Fortbewegung mit dem Sport- und Spielgerät auch der Bereich der Unterschenkel belastet und trainiert.

Anstelle des jeweils nur einen hinteren Rades je Trittbrettelement können dabei auch zwei getrennte Achsen mit jeweils zwei Rädern vorgesehen werden. Die hinteren Räder sind vorzugsweise viel kleiner als die vorderen Räder. In einer besonders bevorzugten Ausführungsform sind die hinteren Räder oder Rollen sogar lenkbar. Hierbei kann es jedoch auch vorteilhaft sein, im hinteren Bereich der Trittbrettelemente starre Rollen oder Räder vorzusehen und die vorderen Räder lenkbar zu machen.

Bei einer besonders bevorzugten Ausführungsform sind die Räder auswechselbar, wodurch durch Änderung des Durchmessers der Räder, insbesondere der vorderen Räder, eine Änderung der Therapieform ermöglicht werden kann, da die Bänder im Fuß- und Beinbereich durch Änderung des Durchmessers der Räder eine jeweils andere Streckung erfahren.

Aufgrund der möglichst achsnahen Befestigung der Trittbrettelemente an den vorderen Rädern können höhere Geschwindigkeiten erzielt werden als mit den entsprechenden Geräten des Standes der Technik. Die Befestigung kann direkt erfolgen, die Räder über Achsen also direkt mit den Trittbrettelementen verbunden sein. Sie kann aber auch indirekt erfolgen, beispielsweise über zusätzliche Elemente. Dabei können vorteilhaft bei besonders langen Trittbrettelementen die jeweiligen Vorder- oder Hinterradachsen abgesenkt werden, wobei deren Drehpunkt nach unten versetzt wird. Besonders bevorzugt wird eine zentrische und eine exzentrische Achse vorgesehen, auf denen Zahnräder oder ähnliche Elemente drehbar gelagert sind. Diese sind über ein weiteres Element, insbesondere einen Zahnriemen kraftschlüssig verbunden, wodurch diese jeweils herabgesetzte Achse keine Auf- und Abbewegung mehr vollführt.

Besonders bevorzugt kann mit einem erfindungsgemäßen Sport- und Spielgerät eine Vorwärtsbewegung und eine Rückwärtsbewegung vorgenommen werden. Bei der Rückwärtsbewegung erweist es sich als sehr vorteilhaft, wenn bei einer bevorzugten Ausführungsform Halteschlaufen im Bereich der vorderen Räder an den Trittbrettelementen montiert sind. Ebenso erweist es sich als sehr vorteilhaft, die Trittbrettelemente mit einer rutschsicheren Auflage bzw. Beschichtung zu versehen. Aufgrund von deren jeweiliger Schrägstellung in einem bestimmten Winkel zur waagerechten Bodenfläche ist dadurch dennoch ein sicherer Halt auf den Trittbrettelementen auch ohne Schuhwerk gegeben.

Alternativ zu den unterschiedlich dimensionierten Rädern können diese auch gleich groß sein. Die Trittbrettelemente können dabei so miteinander verbunden sein, daß das eine Brettelement um 180° gegenüber dem anderen an dem beide verbindenden Rad umgeklappt wird. Dadurch entsteht eine vorteilhaft größere Schrittposition, die für spezielle Übungen genutzt werden kann.

An den Trittbrettelementen und/oder den Rädern können vorzugsweise Haltestangen angebracht sein, die mit den Händen ergriffen werden können. Sie können exzentrisch und/oder zentrisch angelenkt sein und dadurch verschiedene Übungen ermöglichen.

Die Trittbrettelemente können entweder über die gesamte Länge mit etwa derselben Breite versehen sein, oder aber sie können in eine Richtung verjüngt geformt sein. Bei der verjüngten Formgebung wird vorzugsweise im hinteren Bereich Raum zwischen den Trittbrettelementen geschaffen, in welchem die hinteren Räder störungsfrei aneinander vorbei bewegt werden können. Werden Trittbrettelemente mit über der Gesamtlänge im wesentlichen gleichbleibender Breite verwendet, wird vorzugsweise das mittlere, die beiden Trittbrettelemente verbindende Rad breiter geformt, um im hinteren Bereich einen Versatz zu schaffen, damit dort vorgesehene Doppelradpaare aneinander störungsfrei vorbei bewegt werden können. Bei der Verwendung von Rollen unter den Trittbrettelementen reicht für einen störungsfreien Betrieb im Zweifel auch ein schmaleres Rad aus. Anstelle eines breiten Rades können auch zwei schmalere Räder mit dazwischen angeordneten Abstandshalteteilen verwendet werden.

Gerade beim Trainieren ohne Schuhwerk, also barfuß, erweist sich der Bewegungsablauf als sehr geeignet für die Koordination und Steuerung der Zehen. Koordinativ sehr anspruchsvoll erweist sich ebenfalls ein Vorwärts- und Rückwärtswippen. Für den Akteur bedeutet dies ein schnelles Umschalten von Druck- und Zugbewegungen. Dabei bewegt sich das Sport- und Spielgerät nur wenig nach vorne und pendelt in nur kleinen Amplituden nach vorn und nach hinten.

Bei der Fortbewegung auf dem erfindungsgemäßen Sport- und Spielgerät werden zahlreiche Muskeln des Bewegungsapparates eingesetzt, insbesondere der Zwillingswadenmuskel, der Schollenmuskel, der *antibeor tibealis* und verschiedene Bänder am Sprunggelenk.

Zur näheren Erläuterung der Erfindung werden im folgenden verschiedene Ausführungsbeispiete der Erfindung anhand der Zeichnungen näher erläutert. Diese zeigen in:
- Figur 1: eine Draufsicht auf eine erste Ausführungsform als Prinzipskizze eines erfindungsgemäßen Sport- und Spielgerätes;
- Figur 2: eine perspektivische Ansicht der Ausführungsform des Sport- und Spielgerätes gemäß Figur 1;
- Figur 3: eine perspektivische Ansicht schräg von vorn einer zweiten Ausführungsform eines erfindungsgemäßen Sport- und Spielgerätes;
- Figur 4: eine dritte Ausführungsform eines erfindungsgemäßen Sport- und Spielgerätes; und
- Figur 5: Prinzipskizzen des Bewegungsablaufes beim Fortbewegen mit einem erfindungsgemäßen Sport- und Spielgerät gemäß Figur 1;
- Figur 6: eine perspektivische Ansicht einer weiteren Ausführungsform eines erfindungsgemäßen Sport- und Spielgerätes mit um 180° zueinander gedrehten Trittbrettelementen;
- Figur 7: eine perspektivische Ansicht einer weiteren Ausführungsform eines erfindungsgemäßen Sport- und Spielgerätes mit Haltestangen;
- Figur 8: eine perspektivische Ansicht einer weiteren Ausführungsform eines erfindungsgemäßen Sport- und Spielgerätes mit herabgesenkter Hinterachse;
- Figur 9: eine Ansicht von hinten des Sport- und Spielgerätes gemäß Figur 8;
- Figur 10: eine perspektivische Ansicht einer weiteren Ausführungsform des Sport- und Spielgerätes; und
- Figur 11: eine perspektivische Ansicht einer alternativen Ausführungsform zu Figur 10.

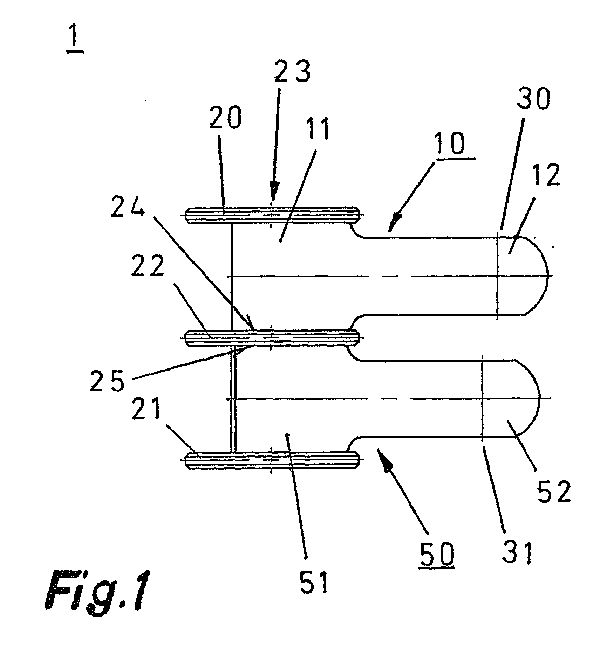

In **Figur 1** ist eine Draufsicht auf eine erste Ausführungsform eines erfindungsgemäßen Sport- und Spielgerätes 1 dargestellt. Das Sport- und Spielgerät weist zwei Trittbrettelemente 10, 50 auf. Die beiden Trittbrettelemente sind parallel zueinander nebeneinander angeordnet.

Das Sport- und Spielgerät weist in der dargestellten Ausführungsform drei vordere Räder 20, 21, 22 auf. Die drei vorderen Räder sind so an den jeweiligen vorderen Bereichen 11, 51 der beiden Trittbrettelemente 10, 50 angeordnet, daß die Trittbrettelemente jeweils beidseitig von den Rädern flankiert werden. Dabei ist das mittlere Rad 22 beidseitig, das bedeutet an seinen beiden Außenflächen 24, 25, mit den beiden Trittbrettelementen 10, 50 versehen.

Im jeweiligen hinteren, schmaleren Bereich 12, 52 der beiden Trittbrettelemente 10, 50 sind weitere Räder 30, 31 angeordnet. In der Ausführungsform gemäß Figur 1 sind sie unter den beiden Trittbrettelementen 10,50 angeordnet und befestigt. Lediglich die Radachsen sind angedeutet.

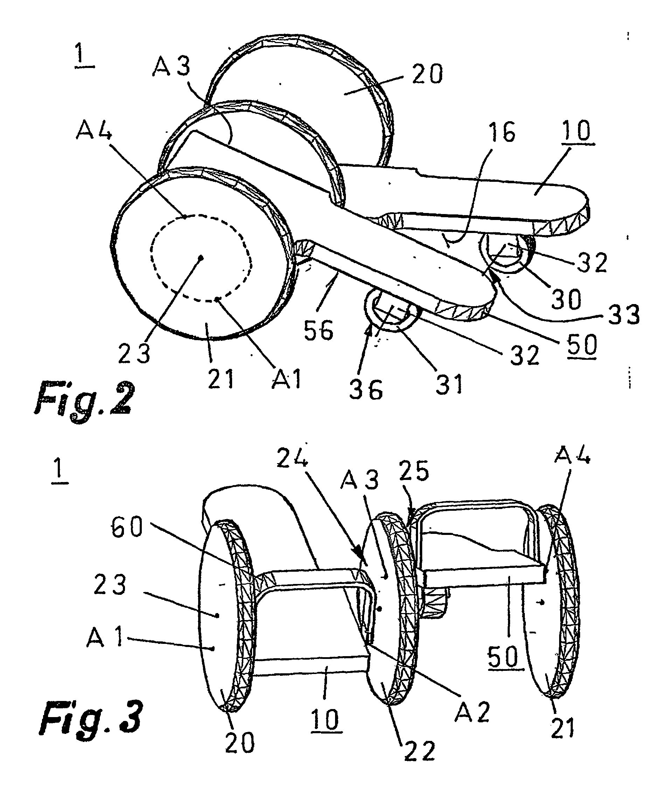

Diese beiden hinteren Räder oder Rollen sind besser **Figur 2** zu entnehmen. Diese Figur zeigt eine perspektivische Ansicht der ersten Ausführungsform gemäß Figur 1. Die Rollen 30, 31 sind an Befestigungselementen 32 auf der Unterseite 16, 56 der beiden Trittbrettelemente 10, 50 befestigt. Die jeweilige Drehachse 33 der beiden Rollen ist in den Befestigungselementen 32 gelagert.

Eine Befestigung der beiden Befestigungselemente 32 für die beiden hinteren Rollen 30, 31 geschieht an den Trittbrettelementen 10, 50 vorzugsweise durch Verschrauben. Diese Befestigungsart eignet sich besonders bei Trittbrettelementen aus Holz. Sind die Trittbrettelemente aus einem anderen stabilen und bruchsicheren Material gefertigt, beispielsweise aus Kunststoff, kann eine entsprechende Befestigungsart oder ein eventuell einteiliges Fertigen von Trittbrettelementen und Befestigungselementen erfolgen.

Die Anbringungspunkte A1 bis A4 der Trittbrettelemente 10, 50 an den Rädern 20, 21, 22 liegen alle auf einem Kreis. Dies ist in Figur 2 gestrichelt angedeutet. Die Anbringung an den einzelnen Rädern ist besser aus **Figur 3** ersichtlich.

Die Ausführungsform gemäß Figur 3, welche in einer perspektivischen Ansicht dargestellt ist, weist prinzipiell den gleichen Aufbau auf, wie die erste Ausführungsform gemäß Figur 1 und 2. Im Unterschied zu dieser weist jedoch die zweite Ausführungsform gemäß Figur 3 Halteschlaufen oder Stege 60 im vorderen Bereich der Trittbrettelemente 10, 50 auf. Die Halteschlaufen dienen einem besseren Halt der auf den Trittbrettelementen aufgelagerten Füße auf diesen. Es entsteht dadurch ein Aufbau, der ähnlich wie bei Sandalen ist. Die Halteschlaufen oder -stege 60 sind an den beiden Trittbrettelementen beispielsweise durch Anschrauben, Vemieten oder eine ähnliche Befestigungsmöglichkeit montiert. Sie bestehen vorzugsweise aus einem festen, bruchsicheren und formbaren Material, insbesondere aus Metall oder Kunststoff oder aber aus Leder oder einem ähnlichen Material. Sie können als Riemen mit einem Schnellverschluß versehen sein. Vorzugsweise erfolgt eine Befestigung auf der Oberfläche der Trittbrettelemente so, daß ein später auf dem Trittbrettelement aufgelagerter Fuß die Halteschlaufe zusätzlich mit fixiert.

Zudem weisen sie vorteilhaft abgerundete Kanten und Ecken auf, um eine Benutzung der Sport- und Spielgerätes auch barfuß zu ermöglichen.

Aus Figur 3 geht besonders deutlich hervor, daß die Anbringungspunkte A1 und A2 des Trittbrettelementes 10 in einer Ebene liegen und die Anbringungspunkte A3 und A4 des Trittbrettelementes 50 in einer zweiten. Die zweite und die erste Ebene sind um 180° versetzt angeordnet. Besonders deutlich wird dies anhand der Anordnung der beiden Trittbrettelemente an dem mittleren vorderen Rad 22.

Die Anbringung der Trittbrettelemente an den Rädern 20, 21, 22 erfolgt vorzugsweise über Stifte oder kurze Achsen, die in Öffnungen in der Oberfläche der Räder eingreifen und darin gelagert sind.

Die Anbringungspunkte A1 bis A4 sind vorzugsweise im achsnahen Bereich der eigentlichen Radachse 23 als Drehachse der Räder 20 bis 22 vorgesehen. Dadurch ist der Kraftaufwand beim Betätigen weniger groß, wohingegen eine höhere Geschwindigkeit der Fortbewegung erzielt werden kann.

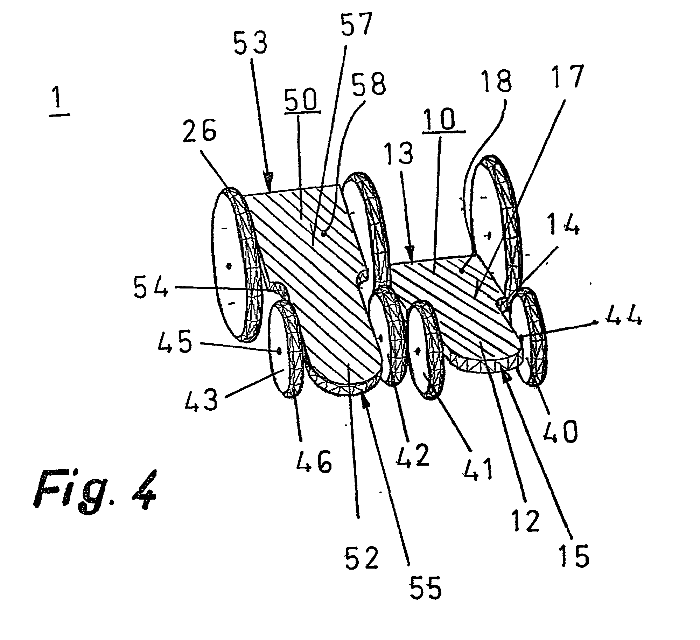

**Figur 4** zeigt eine weitere Ausführungsform eines erfindungsgemäßen Sportund Spielgerätes 1. Im Unterschied zu den vorigen Figuren sind bei dieser Ausführungsform vier hintere Räder 40 bis 43 im hinteren Bereich der Trittbrettelemente 10, 50 angeordnet. Die hinteren Bereiche 12, 52 der beiden Trittbrettelemente 10, 50 werden jeweils beidseitig von Rädern flankiert. Die hinteren Räder 40 bis 43 sind kleiner vom Durchmesser her als die vorderen Räder 20 bis 22. Sie sind entweder mit ihren jeweils getrennten Drehachsen 44, 45 in der Ebene der jeweiligen Trittbrettelemente 10, 50 angeordnet. Sie können aber auch, ähnlich wie die vorderen Räder 20, 21, 22 außermittig über Stifte oder ähnliche kurze Achsen an dem Trittbrettelement 10, 50 drehbar befestigt sein. Radachse und Drehachse wären dann nicht mehr in derselben Ebene angeordnet.

Das Sport- und Spielgerät 1 weist, unabhängig von der jeweiligen Ausführungsform, vorzugsweise eine flache vordere Kante 13, 53 der beiden Trittbrettelemente 10, 50, einen sich verjüngenden mittleren Bereich 14, 54 und eine gerundete hintere Kante 15, 55 auf. Die Trittbrettelemente bestehen vorzugsweise aus einem festen, bruchsicheren und für den Sport- und Spielbereich geeigneten Material. Beispielsweise können sie aus Holz oder einem entsprechenden Kunststoff hergestellt sein, mit jeweils abgerundeten Ecken und Kanten. Für die Räder wird ebenfalls ein möglichst stabiles Material verwendet, insbesondere Holz oder Kunststoff. Vorzugsweise werden die Räder als Scheiben aus Vollmaterial gefertigt.

Um einen rutschsicheren Halt auf den Trittbrettelementen auch bei deren Schrägstellung zu gewährleisten, wird eine Beschichtung 18, 58 auf der jeweiligen Oberfläche 17, 57 der beiden Trittbrettelemente 10, 50 vorgesehen. Diese Beschichtung ist vorzugsweise dann zudem trittfest, schmutzunempfindlich, wasserfest und/oder abwaschbar. Beispielsweise besteht sie daher aus einem Gummi- bzw. Kunststoffmaterial.

Die jeweiligen Laufflächen 26, 46 bzw. 36 (vgl. Fig. 2) der Räder sind besonders bevorzugt mit einem Belag bzw. einer Beschichtung versehen, welche eine Reibung erzeugt. Dadurch wird eine bessere und leichtere Fortbewegung ermöglicht. Eine solche Beschichtung besteht beispielsweise aus Gummi oder einem Weichkunststoff.

Um eine Anpassung an verschiedene Fußgrößen bzw. Schuhgrößen zu ermöglichen, werden vorzugsweise verschiedene Größen in Form eines Sortimentes von Trittbrettelementen vorgesehen. Durch eine geeignete Wahl des Durchmessers der Räder können verschiedene Therapieformen erzielt werden. Es ist hierbei vor allem möglich, durch auswechselbare Räder eine stete Anpassung an Therapieformänderungen vorzusehen. Die Befestigung an den Trittbrettelementen erfolgt dann durch entsprechendes Einrasten von Stiften innerhalb der Öffnungen in den Rädern.

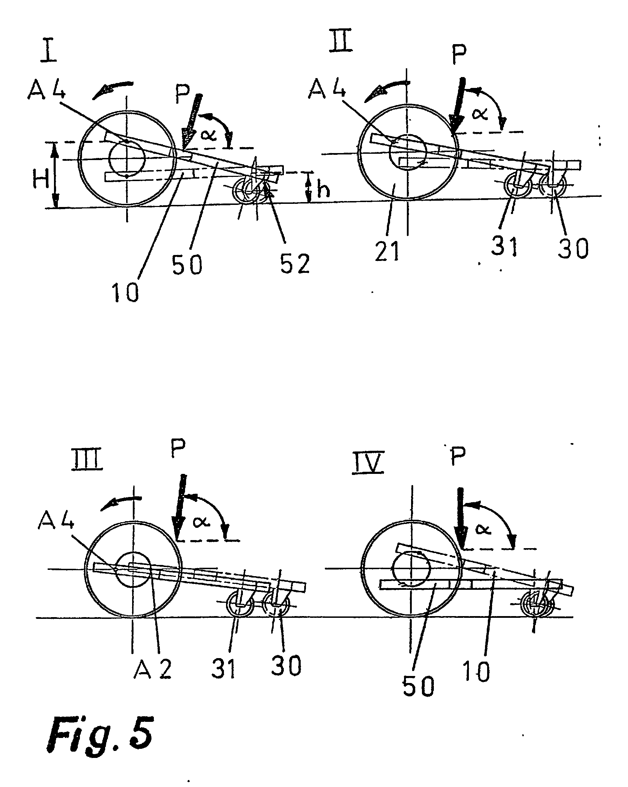

In **Figur 5** ist schematisch der Fortbewegungsvorgang in die Schritte I bis IV aufgeteilt dargestellt. Das Sport- und Spielgerät ist dabei jeweils in der Seitenansicht gezeigt. Der jeweilige Pfeil P gibt die Senkrechte auf das Trittbrettelement 50 an.

Deutlich sichtbar ist der Versatz um 180° der Anbringungspunkte der beiden Trittbrettelemente an den Rädern, wobei die Anbringungspunkte auf einem Kreis liegen.

Im Schritt I wird bei der Fortbewegung zunächst eine Belastungskraft in einem Winkel α zur Waagerechten auf das eine Trittbrettelement 50 aufgebracht. Der Winkel α ist hier ein stumpfer Winkel. Der Winkel α ist dabei abhängig von der Höhe H des Anbringungspunktes A4 des Trittbrettelementes 50 über dem Boden im Vergleich zu der Höhe h des hinteren Bereiches 52 über der Bodenfläche. Ist das Verhältnis H zu h sehr groß, ist der Winkel α verhältnismäßig klein, ist hingegen das Verhältnis H zu h geringer, wird auch der Winkel α größer. Hierbei sind die Verhältnisse der Raddurchmesser von Relevanz.

In der Position II ist eine Weiterdrehung des vorderen Rades 21 entgegen dem Uhrzeigersinn erfolgt. Der Anbringungspunkt A4 ist daher ebenfalls im Gegenuhrzeigersinn weitergewandert. Die hintere Rolle 31 des Trittbrettelementes 50 ist daher im Vergleich zur hinteren Rolle 30 des Trittbrettelementes 10 nun noch weiter nach vom versetzt. Das Trittbrettelement 10 ist nämlich weiter nach hinten versetzt worden bei dem Weiterrollen aufgrund des 180°-Versatzes der Anbringungspunkte von Trittbrettelement 10 und Trittbrettelement 50 an den vorderen Rädern 20 bis 22. Der Winkel α ist gegenüber dem Schritt I größer geworden. Er strebt also weiter einem 90°-Winkel zu.

Der Schritt III gibt die Position an, in der das hintere Rad 31 am weitesten von dem hinteren Rad 30 entfernt angeordnet ist. Der Anbringungspunkt A4 des Trittbrettelementes 50 an dem äußeren vorderen Rad 21 ist nämlich in der vordersten Position angelangt, der Anbringungspunkt A1 bzw. A2 des Trittbrettelementes 10 an dem vorderen Rad 20 bzw. 22 ist in der hintersten Position angelangt. Der Winkel α ist weiter im Vergleich zur Position II angestiegen.

Die Position IV stellt nahezu die umgekehrte Position zur Position I dar. Das Trittbrettelement 50 ist nämlich fast parallel zur Bodenfläche angeordnet. Das Trittbrettelement 10 hat im wesentlichen die steilste Position erreicht. Der Winkel a beträgt daher im wesentlichen 90°. Die beiden hinteren Räder 30, 31 sind fast in einer Fluchtlinie, also in der Seitenansicht nahezu hintereinander, angeordnet.

Bei der Weiterbewegung folgt nun für das Trittbrettelement 10 derselbe Bewegungsablauf wie für das Trittbrettelement 50 im vorhergehenden für die Positionen I - IV geschildert.

Der Winkel α nimmt für das Trittbrettelement 50 nun wieder geringere Werte als 90° an. Letztendlich wird wieder die Position I erreicht.

Aus dem geschilderten Bewegungsablauf ist ersichtlich, daß bei der Fortbewegung mit diesem Sport- und Spielgerät auch die Füße bewegt werden, ähnlich wie bei einer regulären Schrittbewegung. Aufgrund der Belastungsrichtung im Winkel α, der ständig wechselt, werden bei dem Fortbewegen mit dem Sportund Spielgerät die verschiedensten Beinmuskulaturen sowie auch Bänder trainiert. Zudem ist die Belastung aufgrund der nicht nur einseitigen, sondern vielfältigen Richtung für Gelenke und Bänder sehr viel angenehmer zu ertragen und sehr viel natürlicher als bei den lediglich senkrechten Belastungen im Stand der Technik.

Werden anstelle der starren hinteren oder vorderen Räder an dem Sport- und Spielgerät lenkbare Räder vorgesehen, können noch zusätzliche sportliche Effekte mit dem erfindungsgemäßen Sport- und Spielgerät erzielt werden. Ebenso ist es möglich, anstelle zweier hinterer getrennter Achsen für die Anordnung der hinteren Räder 40 bis 43 eine entsprechend gekröpfte durchgehende Achse, die die beiden hinteren Enden 12, 52 der beiden Trittbrettelemente 50, 10 miteinander verbindet, vorzusehen. Hierbei muß lediglich darauf geachtet werden, daß weiterhin eine nicht klemmende Bewegung mit den beiden Trittbrettelementen ermöglicht wird.

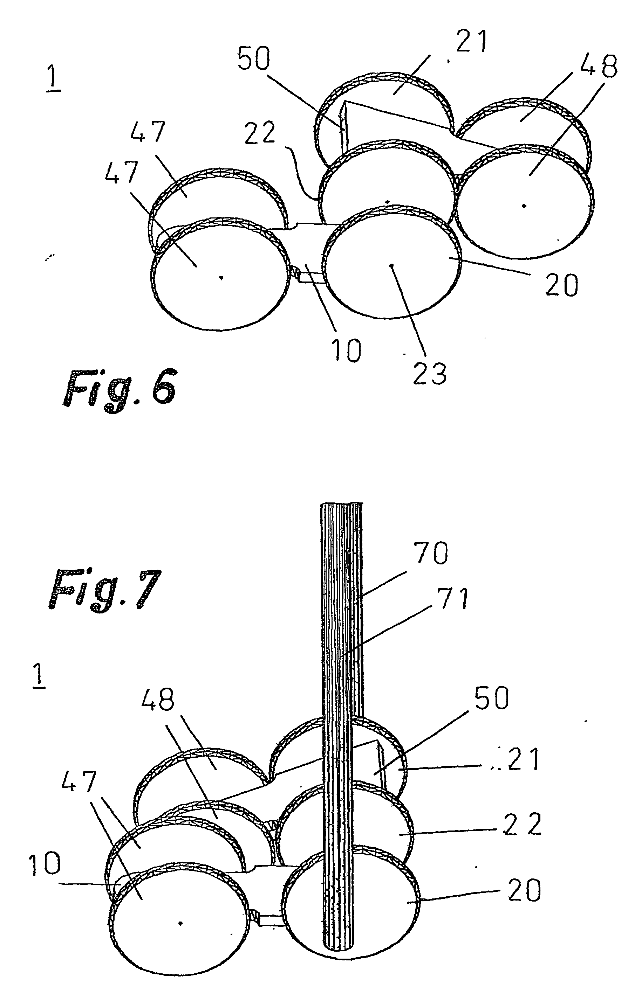

In **Figur 6** ist eine perspektivische Ansicht einer weiteren Ausführungsform des Sport- und Spielgerätes 1 dargestellt. In dieser Ausführungsform sind hintere Räder 47, 48 vorgesehen, welche im wesentlichen denselben Durchmesser aufweisen wie die vorderen Räder 20, 21, 22. Die Form der Trittbrettelemente 10, 50 entspricht der in den vorigen Figuren dargestellten Form. Zusätzlich zu dem Vorsehen der im wesentlichen gleich dimensionierten Räder ist das Trittbrettelement 50 gegenüber dem Trittbrettelement 10 um 180° geschwenkt angeordnet. Dadurch wird eine größere Schrittposition erreicht. Die Bewegung auf diesem Sport- und Spielgerät differiert dadurch von dem in Figur 5 dargesteliten Bewegungsablauf. Bei der größten zu erreichenden Amplitude steht die Ferse des auf dem Trittbrettelement 50 aufgestellten Fußes sowie die Fußspitze des auf dem Trittbrettelement 10 aufgestellten Fußes am mittleren Rad 21 in der obersten Position. Zum Fortbewegen muß eine Druckkraft durch Ferse des einen Fußes sowie die Fußspitze des anderen erfolgen, wodurch eine wellenförmige Bewegung entsteht.

Werden im Unterschied zu den bereits in Figur 1 in der Draufsicht dargestellten Trittbrettelementen mit sich nach hinten verjüngenden Enden Trittbrettelemente mit im wesentlichen rechteckigem Format vorgesehen, kann das mittlere Rad 21 zum Schaffen einer Distanz, um die beiden hinteren Räder 48, 47 nicht zu behindem, als ein breiteres Rad 21 gewählt werden. Ebenso könnte beispielsweise ein Doppelrad an dieser Stelle montiert werden, wobei die beiden einzelnen Räder des Doppelrades jeweils breiter gewählt sind als die hinteren Räder 47, 48. Dadurch wird ein ungestörtes und reibungsloses Aneinander-vorbeigleiten der Hinterräder gewährleistet.

In **Figur 7** ist eine perspektivische Ansicht einer weiteren Ausführungsform eines erfindungsgemäßen Sport- und Spielgerätes 1 dargestellt. Dieses weist Haltestangen 70, 71 auf. In dem dargestellten Fall sind diese an den beiden vorderen Rädern 22, 20 angeordnet. An diesen sind sie drehbar exzentrisch so gelagert, daß bei der Abrollbewegung der Räder auch die beiden Haltestangen 70, 71 jeweils eine Bewegung ausführen. Die beiden Haltestangen können aber auch zentrisch an den beiden Vorderachsen montiert werden. Jedenfalls kann eine auf dem Sport- und Spielgerät übende Person die beiden Haltestangen 70, 71 mit den Händen ergreifen und die durch die Haltestangen ausgeübte Bewegung mitmachen. Dies dient der Schulung der Koordination von Armen und Beinen der übenden Person. Dadurch wird die Ausführung eines Paßganges, "normalen" Ganges, oder aber einer nahezu ruhenden Armbewegung ermöglicht. Es kann auch eine beidhändige Bewegung nach vome bzw. nach hinten vollzogen werden. Dabei ist auch eine Kombination einer zentrischen und einer exzentrischen Anbringung der Haltestangen an den Rädern möglich. Ebenso können die Haltestangen auch an den beiden Trittbrettelementen 50, 10 selbst angeordnet und montiert werden. Auch dabei kann die übende Person die Auf- und Abbewegung der Trittbrettelemente mit den Händen nachvollziehen.

Die Haltestangen 70, 71 weisen insbesondere eine solche Länge auf, daß sie der jeweiligen Länge der übenden Person angepaßt sind. Zu diesem Zweck können unterschiedlich lange Haltestangen vorgesehen werden. Eine normalerweise übliche Armbewegung beim Gehen kann durch Vorsehen der Haltestangen ebenfalls unterstützt werden, insbesondere werden diese so angelenkt, daß die Arme der übenden Person wie auf einem Lenker eines Rollers auf den Haltestangen aufgestützt und damit deren Bewegung nachvollzogen werden kann.

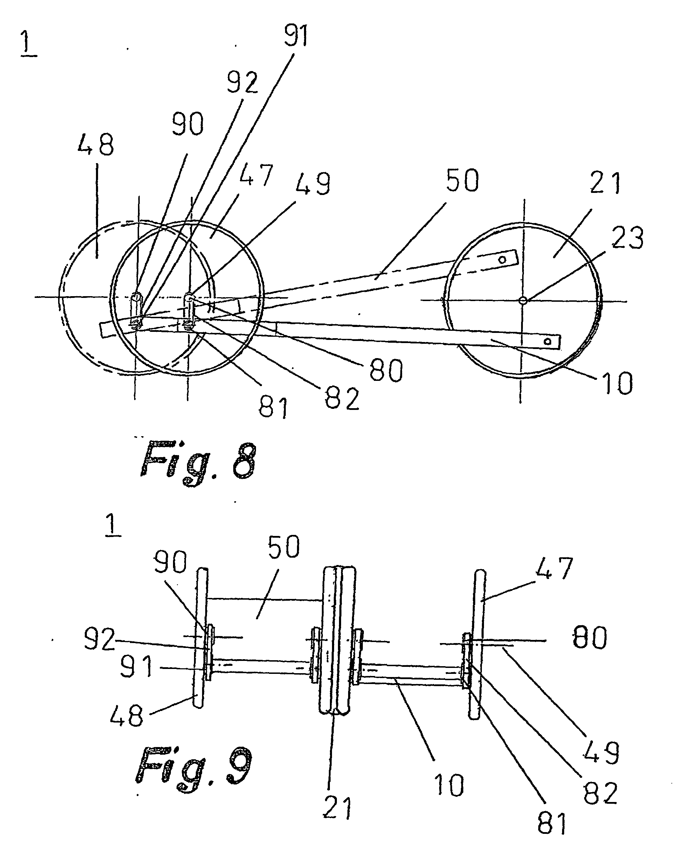

In **Figur 8** ist eine Seitenansicht als Prinzipskizze einer weiteren Ausführungsform eines erfindungsgemäßen Sport- und Spielgerätes 1 dargestellt. In dieser Ausführungsform weist das Sport- und Spielgerät wiederum Räder von im wesentlichen demselben Durchmesser auf. Im vorderen Bereich ist lediglich das mittlere Rad 21 dargestellt. An diesem greifen die beiden Trittbrettelemente 10,50 von beiden Außenflächen her an. Das Rad selbst dreht sich um die Radachse 23.

Im Bereich der hinteren Räder 47, 48 sind die Trittbrettelemente 10, 50 über Zahnräder 80, 81, 90, 91 sowie Zahnriemen 82, 92 aufgehängt. Die jeweiligen Zahnräder 80, 90 sind drehbar auf den Drehachsen 49 der beiden hinteren Räder 47, 48 angeordnet. Im jeweiligen hinteren Endbereich der Trittbrettelemente weisen diese drehbar gelagert ebenfalls ein jeweiliges Zahnrad 81, 91 auf. Diese beiden Zahnräder sind über die jeweiligen Zahnriemen 82, 92 miteinander verbunden.

Während die beiden hinteren Räder 47, 48 eine Rotationsbewegung um die beiden in den Rädern vorgesehenen Drehachsen 49 ausführen, verbleiben die Trittbrettelemente in diesem Bereich in einer nach unten versetzten Position. Diese ist auch in Figur 8 dargestellt. Sie rotieren nicht mit den beiden hinteren Rädern 47, 48 mit, wie dies im Bereich der vorderen Räder, insbesondere dargestellt durch das vordere Rad 21, geschieht.

Eine solche Anbringung eignet sich insbesondere bei sehr langen Trittbrettelementen, da dabei die Amplitude des Anhebens und Absenkens der Trittbrettelemente während der Vorwärtsbewegung bei steigender Länge der Elemente immer kleiner wird und dadurch die Fortbewegungsmöglichkeit beeinträchtigt wird. Wird jedoch im Bereich der Vorderräder weiterhin eine exzentrische Lagerung gewählt und im Bereich der Hinterräder die in Figur 8 dargestellte Lösung, also eine Verbindung von Trittbrettelement zu Achsmittelpunkt des Rades über einen Zahnriemen, wird dadurch der Achsmittelpunkt des Trittbrettelementes nach unten gesenkt, wodurch eine größere Amplitude des Anhebens und Absenkens des Trittbrettelementes erzielt werden kann.

Die Funktionsfähigkeit wird hierbei noch mehr verbessert, sofern die Achsen der hinteren Räder zentrisch in den Rädern angeordnet sind. Die Zahnriemen drehen dabei weiterhin über die zentrischen Achsen und verbinden damit die nach unten verlegten Trittbrettelemente, welche auf jeweils der gleichen Höhe verbleiben.

Das Maß, in welchem der Drehpunkt des Trittbrettelementes nach unten versetzt wird, ist abhängig von der Länge des Zahnriemens 82, 92. Dies kann auch **Figur 9**, welche eine Ansicht von hinten auf das Sport- und Spielgerät gemäß Figur 8 wiedergibt, entnommen werden.

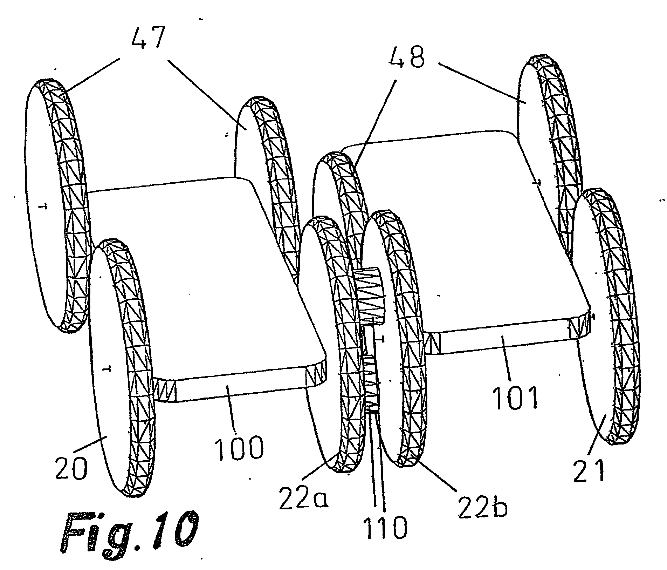

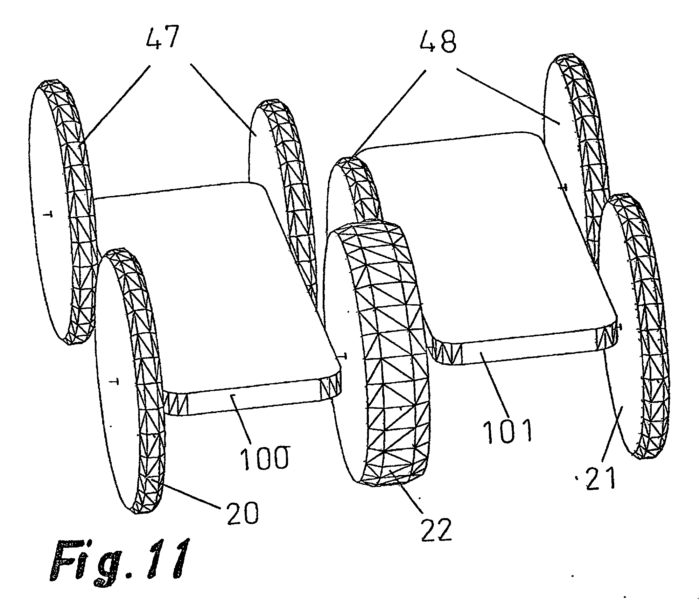

**Figur 10** und **Figur 11** zeigen jeweils perspektivische Ansichten einer weiteren Ausführungsform eines erfrindungsgemäßen Sport- und Spielgerätes mit Trittbrettelementen 100, 101, welche über ihre Länge eine im wesentlichen gleichbleibende Breite aufweisen. Um die Verfahrbarkeit bzw. das störungsfreie Aneinandervorbeibewegen der jeweiligen hinteren Radpaare 47, 48 zu gewähren, sind zwischen den beiden vorderen mittleren Rädern 22a, 22b Abstandshalteteile 110 eingefügt. Dadurch entsteht im vorderen Bereich ein solcher Abstand, daß die hinteren Räder 47, 48 aneinander störungsfrei vorbeibewegt werden können. Alternativ hierzu ist in Figur 11 die Möglichkeit dargestellt, das mittlere vordere Rad 22 im Vergleich zu den beiden anderen vorderen Rädern 20, 21 breiter zu gestalten. Dadurch wird ebenfalls im hinteren Bereich der Trittbrettelemente der erforderliche Abstand geschaffen. Um einen Momentenausgleich zu schaffen, erweist sich die Verwendung von zwei Abstandshalteteilen 110, wie dies in Figur 10 dargestellt ist, als vorteilhaft zum festen Verbinden der beiden vorderen mittleren Räder 22a, 22b. Alternativ hierzu können auch drei Abstandshalteteile oder mehr oder aber lediglich ein zentral angeordnetes Abstandshalteteil verwendet werden.

### Bezugszeichen

- 1: Sport- und Spielgerät

- 10: Trittbrettelement
- 11: vorderer Bereich
- 12: hinterer Bereich
- 13: flache vordere Kante
- 14: sich verjüngender mittlerer Bereich
- 15: gerundete hintere Kante
- 16: Unterseite
- 17: Oberfläche
- 18: Beschichtung

- 20: vorderes Rad, äußeres
- 21: vorderes Rad, äußeres
- 22: vorderes Rad, mittleres
- 22a: vorderes Rad
- 22b: vorderes Rad
- 23: Radachse (Drehachse)
- 24: Außenfläche
- 25: Außenfläche
- 26: Lauffläche

- 30: hinteres Rad (Rolle)
- 31: hinteres Rad (Rolle)
- 32: Befestigungselemente
- 33: Drehachse (Radachse
- 36: Lauffläche

- 40: hinteres Rad, äußeres
- 41: hinteres Rad, inneres
- 42: hinteres Rad, äußeres
- 43: hinteres Rad, inneres
- 44: Radachse (Drehachse)
- 45: Radachse (Drehachse)
- 46: Lauffläche
- 47: hinteres Rad
- 48: hinteres Rad
- 49: Drehachse

- 50: Trittbrettelement
- 51: vorderer Bereich
- 52: hinterer Bereich
- 53: flache vordere Kante
- 54: sich verjüngender mittlerer Bereich
- 55: gerundete hintere Kante
- 56: Unterseite
- 57: Oberfläche
- 58: Beschichtung
- 60: Halteschlaufen bzw. -stege

- 70: Haltestange
- 71: Haltestange

- 80: Zahnrad
- 81: Zahnrad
- 82: Zahnriemen

- 90: Zahnrad
- 91: Zahnrad
- 92: Zahnriemen

- 100: Trittbrettelement
- 101: Trittbrettelement
- 110: Abstandshalteteile

- P: Pfeil (Belastungsrichtung)

- A1: Anbringungspunkt
- A2: Anbringungspunkt
- A3: Anbringungspunkt
- A4: Anbringungspunkt

- H: Höhe
- h: Höhe
- α: Winkel

## Patentansprüche

1. Sport- und Spielgerät mit Rädern und dazwischen angeordneten Trittbrettelementen zum Fortbewegen durch Betätigen mit den Füßen, wobei die Trittbrettelemente (10, 50, 100, 101) so dimensioniert sind, daß auf ihnen ein gesamter Fuß auflagerbar ist und
zumindest drei vordere Räder (20, 21, 22) parallel zueinander, die beiden Trittbrettelemente beidseitig flankierend, und zumindest zwei weitere hintere Räder (30, 31; 40, 41, 42, 43) im Bereich der hinteren Enden der Trittbrettelemente angeordnet sind, **dadurch gekennzeichnet,**
**daß** die Trittbrettelemente an zumindest zwei Rädern exzentrisch so angeordnet sind, daß sie in einem wechselnden Winkel zueinander und zur Bodenfläche angeordnet sind.

2. Sport- und Spielgerät nach Anspruch 1,
**dadurch gekennzeichnet,**
**daß** die Anbringungspunkte (A1, A2, A3, A4) der Trittbrettelemente an den Rädern jeweils auf einem Kreis um die Drehachsen der Räder liegend vorgesehen sind, wobei die Anbringungspunkte eines Trittbrettelementes an zwei benachbarten vorderen Rädern jeweils entsprechend gleich positioniert und die Anbringungspunkte des ersten und des zweiten Trittbrettelementes an den beiden Außenflächen (24, 25) des mittleren Rades (22) oder zweier mittlerer Räder um einen Winkel von 180° versetzt-auf einem Kreis liegen, wobei ein Fortbewegen mit dem Sport- und Spielgerät in Form einer Schrittbewegung erfolgt.

3. Sport- und Spielgerät nach Anspruch 1 oder 2,
**dadurch gekennzeichnet,**
**daß** eine achsnahe direkte oder indirekte Befestigung der Trittbrettelemente an den Rädern erfolgt.

4. Sport- und Spielgerät nach Anspruch 3,
**dadurch gekennzeichnet,**
**daß** die jeweiligen Vorder- oder Hinterachsen der Räder herabgesenkt sind, wobei der jeweilige Drehpunkt nach unten versetzt ist.

5. Sport- und Spielgerät nach Anspruch 3 oder 4,
**dadurch gekennzeichnet,**
**daß** bei indirekter Befestigung eine zentrische Achse und eine exzentrische Achse vorgesehen sind, auf denen jeweils ein Kraftübertragungselement, (80, 81; 90, 91), insbesondere ein Zahnrad, sowie ein die beiden Elemente verbindendes Element, (82; 92), insbesondere ein Zahnriemen, vorgesehen sind.

6. Sport- und Spielgerät nach einem der vorstehenden Ansprüche,
**dadurch gekennzeichnet,**
**daß** die hinteren Räder unter den Trittbrettelementen angeordnete Rollen (30, 31) oder ähnlich geformte Rollelemente sind.

7. Sport- und Spielgerät nach Anspruch 6,
**dadurch gekennzeichnet,**
**daß** die hinteren Räder lenkbare Rollen sind.

8. Sport- und Spielgerät nach einem der Ansprüche 1 bis 3,
**dadurch gekennzeichnet,**
**daß** die hinteren Räder jeweils zwei Räder (40, 41, 42, 43) auf getrennten Achsen (44, 45) in Anordnung an den hinteren Enden (12, 52) der Trittbrettelemente sind.

9. Sport- und Spielgerät nach einem der Ansprüche 1 bis 3,
**dadurch gekennzeichnet,**
**daß** die hinteren Räder jeweils zwei Räder auf einer gemeinsamen Achse in Anordnung in einer Langnut an den hinteren Enden der Trittbrettelemente sind, wobei das jeweilige Trittbrettelement entlang der Langnut fährt.

10. Sport- und Spielgerät nach einem der Ansprüche 1 bis 3,
**dadurch gekennzeichnet,**
**daß** die hinteren Räder im wesentlichen denselben Durchmesser aufweisen wie die vorderen Räder.

11. Sport- und Spielgerät nach Anspruch 10,
**dadurch gekennzeichnet,**
**daß** die Trittbrettelemente so ausgeformt und miteinander verbunden sind, daß eines der Bretter um 180° gegenüber dem anderen so umklappbar ist, daß eine große Schrittposition entsteht.

12. Sport- und Spielgerät nach einem der vorstehenden Ansprüche,
**dadurch gekennzeichnet,**
**daß** eine jeweilige Halteschlaufe (60) oder ein Haltesteg im vorderen Bereich (11, 51) der Trittbrettelemente (10, 50) an diesen vorgesehen und/oder befestigt ist.

13. Sport- und Spielgerät nach Anspruch 12,
**dadurch gekennzeichnet,**
**daß** die Halteschlaufe (60) aus einem festen, bruchsicheren und formbaren Material, insbesondere aus Metall, Kunststoff oder Leder besteht und abgerundete Kanten und/oder Ecken aufweist.

14. Sport- und Spielgerät nach einem der vorstehenden Ansprüche,
**dadurch gekennzeichnet,**
**daß** die Trittbrettelemente aus einem festen, bruchsicheren und für den Sportbereich geeigneten Material, insbesondere aus Holz oder einem entsprechenden Kunststoff, bestehen und abgerundete Ecken und Kanten aufweisen, und
**daß** die Räder aus einem stabilen Material bestehen, insbesondere aus Holz oder einem entsprechend gefertigten Kunststoff.

15. Sport- und Spielgerät nach einem der vorstehenden Ansprüche,
**dadurch gekennzeichnet,**
**daß** die Trittbrettelemente mit einer Beschichtung (18, 58) versehen sind, insbesondere einer rutschsicheren, trittfesten, schmutzunempfindlichen, wasserfesten und/oder abwaschbaren Beschichtung, und
**daß** die Räder mit einer Reibung erzeugenden Beschichtung der Laufflächen (26, 36, 46), insbesondere einer Gummi- oder Weichkunststoffschicht, versehen sind.

16. Sport- und Spielgerät nach einem der vorstehenden Ansprüche,
**dadurch gekennzeichnet,**
**daß** die Trittbrettelemente variable, an verschiedene Fußgrößen anpaßbare oder angepaßte Längen aufweisen, und
**daß** die Räder verschiedene Durchmesser aufweisen, insbesondere auswechselbar und an die jeweilige Verwendung, insbesondere an Therapieformänderungen anpaßbar gestaltet sind.

17. Sport- und Spielgerät nach einem der vorstehenden Ansprüche,
**dadurch gekennzeichnet,**
**daß** die Trittbrettelemente (100, 101) über ihre Länge im wesentlichen gleichbleibende Breite aufweisen, wobei ein oder mehrere Abstandshalteteile (110) im Bereich von einem Doppel-Radpaar (22a, 22b) oder ein breites mittleres, die Trittbrettelemente verbindendes Rad (22) vorgesehen ist, oder
**daß** die Trittbrettelemente zu jeweils einer Seite hin verjüngt sind.

18. Sport- und Spielgerät nach einem der vorstehenden Ansprüche,
**dadurch gekennzeichnet,**
**daß** Haltestangen (70, 71) an den Rädern und/oder Trittbrettelementen zum Angreifen mit den Händen exzentrisch und/oder zentrisch angelenkt sind.

## Claims

1. Sports and games device with wheels and foot board elements, disposed in between, for propulsion by operation with the feet, wherein the foot board elements (10, 50, 100, 101.) are dimensioned such that they can support an entire foot, and
at least three front wheels (20, 21, 22) are disposed parallel to one another, flanking both the foot board elements on both sides, arid at least two further rear wheels (30, 31; 40; 41, 42,;43) are disposed in the region of the rear ends of the foot board elements,
**characterised in**
**that** the foot board elements are disposed eccentrically at least at two wheels such that they are disposed at an angle which changes relative to one another and to the ground surface.

2. Sports and games device according to Claim 1,
**characterised in**
**that** the attachment points (A1, A2, A3, A4) of the foot board elements at the wheels are in each case provided in a circle about the rotational axes of the wheels, wherein the attachment points of a foot board element at two adjacent front wheels are in each case similarly positioned and the attachment points of the first and of the second foot board element at the two outer surfaces (24, 25) of the central wheel (22) or two central wheels lie staggered by an angle of 180° in a circle, wherein the sports and games device is propelled by a stepping movement.

3. Sports and games device according to Claim 1 or 2,
**characterised in**
**that** the foot board elements are fastened to the wheels directly or indirectly near the axles.

4. Sports and games device according to Claim 3,
**characterised in**
**that** the respective front or rear axles of the wheels are lowered, wherein the respective centre of rotation is displaced downwards.

5. Sports and games device according to Claim 3 or 4,
**characterised in**
**that** a centric axle and an eccentric axle are provided when the elements are fastened indirectly, on which axles a respective power transmission element (80, 81; 90, 91), in particular a gear wheel, as well as an element (82; 92), in particular a toothed belt, which connects the two elements are in each case provided.

6. Sports and games device according to any one of the preceding Claims,
**characterised in**
**that** the rear wheels are rollers (30, 31) or similarly shaped rolling elements disposed beneath the foot board elements.

7. Sports and games device according to Claim 6,
**characterised in**
**that** the rear wheels are steerable rollers.

8. Sports and games device according to any one of Claims 1 to 3,
**characterised in**
**that** the rear wheels are in each case two wheels (40, 41, 42, 43) on separate axles (44, 45) disposed at the rear ends (12, 52) of the foot board elements.

9. Sports and games device according to any one of Claims 1 to 3,
**characterised in**
**that** the rear wheels are in each case two wheels on a common axle disposed in an elongate slot at the rear ends of the foot board elements, wherein the respective foot board element travels along the elongate slot.

10. Sports and games device according to any one of Claims 1 to 3,
**characterised in**
**that** the rear wheels have substantially the same diameter as thefront wheels.

11. Sports and games device according to Claim 10,
**characterised in**
**that** the foot board elements are formed and connected together such that one of the boards can be turned over through 180° with respect to the other board so as to produce a large stepping position.

12. Sports and games device according to any one of the preceding Claims, **characterised in**
**that** a respective retaining strap (60) or a retaining crosspiece is provided at and/or fastened to the foot board elements (10, 50) in the front region (11, 51) of the latter.

13. Sports and games device according to Claim 12,
**characterised in**
**that** the retaining strap (60) consists of a strong, fracture-proof and mouldable material, in particular of metal, plastics or leather, and has rounded edges and/or corners.

14. Sports and games device according to any one of the preceding Claims, **characterised in**
**that** the foot board elements consist of a material which is strong and fracture-proof and suitable for the sports sector, in particular of wood or an appropriate plastics material, and have rounded corners and edges, and that the wheels consist of a stable material, in particular of wood or an appropriately manufactured plastics material.

15. Sports and games device according to any one of the preceding Claims, **characterised in**
**that** the foot board elements are provided with a coating (18, 58), in particular a non-slip, hard-wearing, soil-resistant, waterproof and/or washable coating, and
**that** the wheels are provided with a friction-producing coating of the treads (26, 36, 46), in particular a rubber or flexible plastics layer.

16. Sports and games device according to any one of the preceding Claims, **characterised in**
**that** the foot board elements are of variable lengths, adaptable or adapted to different foot sizes, and
**that** the wheels have different diameters, are in particular replaceable and configured so as to be adaptable to the respective use, in particular to changes in forms of therapy.

17. Sports and games device according to any one of the preceding Claims,
**characterised in**
**that** the foot board elements (100, 101) are of a substantially constant width over their length, wherein one or more spacers (110) is/are provided in the region of a twin wheel pair (22a, 22b) or a wide central wheel (22) connecting the foot board elements, or
**that** the foot board elements are tapered to one side in each case.

18. Sports and games device according to any one of the preceding Claims,
**characterised in**
**that** holding bars (70, 71) are articulated eccentrically and/or centrically to the wheels and/or foot board elements so as to be gripped by the hands.

## Revendications

1. Appareil de sport et de jeu avec des roues et des éléments de pédales disposés entre celles-ci pour se déplacer par une commande avec les pieds, dans lequel les éléments de pédales (10, 50, 100, 101) sont dimensionnés de telle façon que tout le pied puisse y être posé, et au moins trois roues avant (20, 21, 22) flanquant de part et d'autre les deux éléments de pédales sont disposées parallèlement l'une à l'autre, et au moins deux autres roues arrière (30, 31; 40, 41, 42, 43) sont disposées dans la région arrière des éléments de pédales,
**caractérisé en ce que**
les éléments de pédales sont disposés excentriquement sur au moins deux roues, de telle façon qu'ils soient disposés avec un angle variable l'un par rapport à l'autre et par rapport à la surface du sol.

2. Appareil de sport et de jeu selon la revendication 1, **caractérisé en ce que**
les points d'attache (A1, A2, A3, A4) des éléments de pédales sur les roues sont situés respectivement sur un cercle autour des axes de rotation des roues, dans lequel les points d'attache d'un élément de pédale sont positionnés de manière identique en correspondance respective sur deux roues avant voisines et les points d'attache du premier et du deuxième élément de pédale sur les deux faces extérieures (24, 25) de la roue centrale (22) ou de deux roues centrales sont situés sur un cercle avec un décalage angulaire de 180°, dans lequel un déplacement avec l'appareil de sport et de jeu est effectué sous la forme d'un mouvement de marche.

3. Appareil de sport et de jeu selon la revendication 1 ou 2, **caractérisé en ce que**
une fixation directe ou indirecte, proche de l'axe, des éléments de pédales est réalisée sur les roues.

4. Appareil de sport et de jeu selon la revendication 3, **caractérisé en ce que**
les axes avant et arrière respectifs des roues sont surbaissés, le point de rotation respectif étant déporté vers le bas.

5. Appareil de sport et de jeu selon la revendication 3 ou 4, **caractérisé en ce que**
en cas de fixation indirecte, il est prévu un axe centré et un axe excentré, sur lesquels il est chaque fois prévu un organe de transmission de force (80, 81; 90, 91), en particulier une roue dentée, ainsi qu'un élément reliant les deux organes (82;92), en particulier une courroie crantée.

6. Appareil de sport et de jeu selon l'une quelconque des revendications précédentes, **caractérisé en ce que**
les roues arrière sont des roulettes (30, 31) ou des organes roulants de forme analogue, disposées sous les éléments de pédales.

7. Appareil de sport et de jeu selon la revendication 6, **caractérisé en ce que**
les roues arrière sont des roulettes pivotantes.

8. Appareil de sport et de jeu selon l'une quelconque des revendications 1 à 3, **caractérisé en ce que**
les roues arrière sont chaque fois deux roues (40, 41, 42, 43) sur des axes séparés (44, 45), disposés sur les extrémités arrière (12, 52) des éléments de pédales.

9. Appareil de sport et de jeu selon l'une quelconque des revendications 1 à 3, **caractérisé en ce que**
les roues arrière sont chaque fois deux roues sur un axe commun disposé dans une rainure longitudinale dans les extrémités arrière des éléments de pédales, l'élément de pédale respectif se déplaçant le long de la rainure longitudinale.

10. Appareil de sport et de jeu selon l'une quelconque des revendications 1 à 3, **caractérisé en ce que**
les roues arrière présentent sensiblement le même diamètre que les roues avant.

11. Appareil de sport et de jeu selon la revendication 10, **caractérisé en ce que**
les éléments de pédales sont façonnés et assemblés l'un à l'autre de telle façon qu'une des pédales puisse être rabattue de 180° par rapport à l'autre, de façon à créer une position de marche allongée.

12. Appareil de sport et de jeu selon l'une quelconque des revendications précédentes, **caractérisé en ce que**
un étrier de retenue respectif (60) ou une barrette de retenue est prévu(e) et/ou fixé(e) aux éléments de pédales (10, 50), dans la région avant (11, 51) de ceux-ci.

13. Appareil de sport et de jeu selon la revendication 12, **caractérisé en ce que**
l'étrier de retenue (60) est constitué d'une matière solide, incassable et déformable, en particulier de métal, de matière plastique ou de cuir, et présente des arêtes et/ou des coins arrondis.

14. Appareil de sport et de jeu selon l'une quelconque des revendications précédentes, **caractérisé en ce que**
les éléments de pédales sont constitués d'une matière solide, incassable et appropriée pour le sport, en particulier de bois ou d'une matière plastique correspondante, et présentent des arêtes et des coins arrondis, et
**en ce que** les roues sont constituées d'une matière stable, en particulier de bois ou d'une matière plastique fabriquée dans ce but.

15. Appareil de sport et de jeu selon l'une quelconque des revendications précédentes, **caractérisé en ce que**
les éléments de pédales sont pourvus d'un revêtement (18, 58), en particulier d'un revêtement antidérapant, inusable, insensible à l'encrassement, résistant à l'eau et/ou lavable, et **en ce que** les roues sont pourvues d'un revêtement de frottement sur les surfaces de roulement (26, 36, 46), en particulier d'une couche de caoutchouc ou de matière plastique souple.

16. Appareil de sport et de jeu selon l'une quelconque des revendications précédentes, **caractérisé en ce que**
les éléments de pédales présentent des longueurs variables, adaptables ou adaptées à différentes pointures de pieds, et
**en ce que** les roues présentent différents diamètres, en particulier sont interchangeables et ont une structure adaptable à chaque application, en particulier à des changements de forme thérapeutique.

17. Appareil de sport et de jeu selon l'une quelconque des revendications précédentes, **caractérisé en ce que**
les éléments de pédales (100, 101) présentent une largeur restant sensiblement constante sur leur longueur, dans lequel il est prévu une ou plusieurs pièces d'écartement (110) dans la région d'une double paire de roues (22a, 22b) ou une roue centrale large (22) reliant les éléments de pédales ou **en ce que** les éléments de pédales sont chacun rétrécis vers un côté.

18. Appareil de sport et de jeu selon l'une quelconque des revendications précédentes, **caractérisé en ce que**
des barres de maintien (70, 71) à saisir avec les mains sont articulées sur les roues et/ou les éléments de pédales, en position excentrée et/ou centrée.
